# FASCICULE DE BREVET EUROPEEN

(11) **EP 4 167 440 B1**
(45) Date de publication et mention de la délivrance du brevet: **26.03.2025**
(21) Numéro de dépôt: 22201398.9
(22) Date de dépôt: 13.10.2022
(51) Int. Cl.: H02K 1/32, H02K 3/24, H02K 9/19

(54) **ROTOR BOBINÉ POUR MOTEUR ÉLECTRIQUE MUNI D'UN CIRCUIT DE REFROIDISSEMENT**
GEWICKELTER ROTOR FÜR EINEN ELEKTROMOTOR MIT EINEM KÜHLKREISLAUF
WOUND ROTOR FOR AN ELECTRIC MOTOR PROVIDED WITH A COOLING CIRCUIT

(30) Priorité: 15.10.2021 FR 2110958
(43) Date de publication de la demande: 19.04.2023
(73) Titulaire: NOVARES France, 78140 Vélizy-Villacoublay (FR)
(72) Inventeur: LEDIEU, Cédric, 62144 MONT SAINT ELOI (FR); MILLUY, Ludovic, 62860 ECOURT St QUENTIN (FR)
(74) Mandataire: Germain Maureau

(56) Documents cités:
- EP-A1- 3 633 825
- DE-A1- 102016 205 653
- DE-A1- 102017 222 635
- US-A1- 2002 180 284
- US-A1- 2016 211 713
- US-B2- 8 138 642

## Description

L'invention concerne un rotor bobiné pour moteur électrique agencé pour permettre une meilleure évacuation de la chaleur générée lors de son fonctionnement. L'invention concerne également un moteur électrique comprenant un tel rotor bobiné.

De manière générale, les moteurs électriques actuels comportent un rotor solidaire d'un arbre et un stator qui entoure le rotor. Le stator est monté dans un carter qui comporte des roulements pour le montage en rotation de l'arbre. Le stator comporte généralement un corps constitué par un empilage de tôles formant une couronne, dont la face intérieure est pourvue de dents délimitant deux à deux une pluralité d'encoches ouvertes vers l'intérieur du corps de stator et destinées à recevoir des enroulements de phase. Ces enroulements de phase traversent les encoches du corps de stator et forment des chignons faisant saillie de part et d'autre du corps de stator. Les enroulements de phase peuvent par exemple être constitués d'une pluralité de segments de conducteur en forme de U, les extrémités libres de deux segments adjacents étant reliées entre elles par soudage. Le rotor peut être de plusieurs types. Une configuration possible consiste en un rotor bobiné constitué par un paquet de tôles monté coaxialement sur l'arbre de rotor, ledit paquet de tôles présentant plusieurs paires de pôles, chaque pôle étant espacé d'un pôle adjacent par un espace interpolaire, et des bobinages entourant les pôles du paquet de tôles et étant reliés à un collecteur formé généralement par des bagues en cuivre venant en face de balais pour l'alimentation des bobinages.

Lors du fonctionnement du moteur, les courants circulant à travers les enroulements de phase du stator et les bobinages du rotor génèrent une chaleur importante qui doit être évacuée. Pour refroidir le moteur, il existe actuellement plusieurs solutions. L'une de ces solutions consiste à projeter un fluide de refroidissement à l'intérieur du moteur de telle sorte qu'il soit en contact avec les enroulements de phase du stator et les bobinages du rotor. Cette solution présente toutefois l'inconvénient de ne pas projeter le fluide de refroidissement directement sur les enroulements de phase du stator et les bobinages du rotor ce qui génère une surconsommation de fluide de refroidissement pour permettre une bonne évacuation de la chaleur générée par ces enroulements de phase et ces bobinages.

EP 3 633 825 A1 concerne un rotor bobiné comportant des tuyaux de circulation d'un fluide de refroidissement disposés soit au contact des isolants des bobinages, soit à l'intérieur des espaces intercalaires entre plusieurs bobinages.

L'invention vise donc à proposer un rotor bobiné et un moteur électrique comprenant un tel rotor agencé pour permettre une meilleure évacuation de la chaleur générée lors de son fonctionnement, en refroidissant au plus près les bobinages du rotor et/ou les chignons du stator, et ne présentant pas les inconvénients des solutions existantes décrites précédemment.

A cet effet, l'invention concerne un rotor bobiné pour moteur électrique comprenant :
- un arbre de rotor monté rotatif autour d'un axe ;
- un paquet de tôles monté coaxialement sur l'arbre de rotor, ledit paquet de tôles s'étendant entre une face latérale avant et une face latérale arrière et présentant une alternance de pôles et d'espaces interpolaires,
- des isolants de paquet de tôles disposés de manière à recouvrir au moins partiellement des surfaces externes du paquet de tôles définissant les espaces interpolaires, lesdits isolants de paquet de tôles et lesdites surfaces externes étant configurés pour former, entre eux, des canaux longitudinaux de circulation de fluide, lesdits canaux longitudinaux de circulation de fluide s'étendant axialement le long du paquet de tôles de telle sorte qu'ils débouchent, à l'une de leurs extrémités, au niveau de la face latérale avant dudit paquet de tôles et, à une autre de leurs extrémités, au niveau de la face latérale arrière dudit paquet de tôles, lesdits canaux longitudinaux de circulation de fluide étant configurés pour permettre la circulation d'un fluide de refroidissement;
- un flasque de bobinage avant et un flasque de bobinage arrière montés coaxialement sur l'arbre de rotor et agencés axialement de part et d'autre du paquet de tôles de telle sorte à être contigus respectivement aux faces latérales avant et arrière du paquet de tôles, lesdits flasques de bobinage avant et arrière présentant chacun une série de branches radiales en forme de T, chacune desdites branches radiales étant alignée axialement avec un des pôles du paquet de tôles et présentant, de préférence, un profil similaire ou identique à celui dudit pôle dans un plan perpendiculaire à l'axe de l'arbre ;
- des bobinages entourant partiellement les isolants de paquet de tôles et les branches radiales des flasques de bobinage avant et arrière ;
dans lequel l'arbre est muni d'au moins un premier canal interne de circulation d'un fluide de refroidissement, dit canal d'entrée de fluide, et d'au moins un deuxième canal interne de circulation d'un fluide de refroidissement, dit canal de sortie de fluide, et en ce que le flasque de bobinage avant, respectivement le flasque de bobinage arrière, est traversé par au moins un canal de liaison avant, respectivement arrière, à l'intérieur duquel peut circuler un fluide de refroidissement, ledit au moins un canal de liaison avant, respectivement arrière, étant en communication fluidique avec l'un desdits canaux d'entrée de fluide et de sortie de fluide et avec au moins l'un desdits canaux longitudinaux de circulation de fluide.

Ainsi configuré, le rotor de l'invention pourra avantageusement être refroidi au moyen d'un fluide de refroidissement circulant successivement à l'intérieur de l'arbre de rotor via le canal d'entrée de fluide, puis à l'intérieur d'un des flasques de bobinage via les canaux de liaison avant ou arrière, puis le long du paquet de tôles via les canaux longitudinaux de circulation de fluide, puis à l'intérieur de l'autre flasque de bobinage via les canaux de liaison arrière ou avant, pour finalement sortir du rotor via le canal de sortie de fluide, permettant ainsi une bonne évacuation de chaleur du rotor du fait du contact direct du fluide avec le paquet de tôles.

Le rotor de l'invention pourra également comprendre une ou plusieurs des caractéristiques suivantes :
- ledit au moins un canal de liaison avant est en communication fluidique avec le canal d'entrée de fluide et ledit au moins un canal de liaison arrière est en communication fluidique avec le canal de sortie de fluide, de telle sorte qu'un fluide destiné au refroidissement du rotor puisse circuler dans le rotor successivement au travers du canal d'entrée de fluide, puis à l'intérieur du flasque de bobinage avant au travers dudit au moins un canal de liaison avant, puis le long du paquet de tôles au travers d'au moins l'un des canaux longitudinaux de circulation de fluide, puis à l'intérieur du flasque de bobinage arrière au travers dudit au moins un canal de liaison arrière, et finalement au travers du canal de sortie de fluide.
- l'arbre comprend une portion d'extrémité avant et une portion d'extrémité arrière séparée de la portion d'extrémité avant par une portion centrale pleine, la portion d'extrémité avant, respectivement la portion d'extrémité arrière, étant traversée par une cavité centrale de forme cylindrique, ladite cavité centrale formant le canal d'entrée de fluide, respectivement le canal de sortie de fluide, de l'arbre, et en ce qu'au moins un trou de liaison orienté radialement par rapport à l'axe de l'arbre est formé à l'intérieur de la portion d'extrémité avant, respectivement de la portion d'extrémité arrière, de manière à déboucher d'un côté dans le canal d'entrée de fluide, respectivement dans le canal de sortie de fluide, et de l'autre côté dans ledit au moins un canal de liaison avant, respectivement dans ledit au moins un canal de liaison arrière.
- ledit au moins un canal de liaison avant, respectivement arrière, comprend au moins une premier section orientée radialement par rapport l'axe de l'arbre, au moins une deuxième section orientée de manière orthoradiale par rapport à l'axe de l'arbre, et au moins une troisième section orientée de manière parallèle à l'axe de l'arbre, dans lequel ladite au moins une première section possède au moins une extrémité jouxtant l'arbre de rotor, dans lequel ladite au moins une deuxième section débouche, d'un côté, sur ladite au moins une première section et, de l'autre côté, sur ladite au moins une troisième section, et dans lequel ladite au moins une troisième section possède au moins une extrémité débouchant au niveau d'un des canaux longitudinaux de circulation de fluide.

- le flasque de bobinage avant, respectivement arrière, est traversé par une pluralité de canaux de liaison avant, respectivement arrière, chacun desdits canaux de liaison avant, respectivement arrière, comprend une première section orientée radialement par rapport à l'axe de l'arbre, plusieurs deuxièmes sections orientées de manière orthoradiale par rapport à l'axe de l'arbre, et plusieurs troisièmes sections orientées de manière parallèle à l'axe de l'arbre, dans lequel ladite première section possède au moins une extrémité jouxtant l'arbre de rotor, dans lequel chacune desdites deuxièmes sections débouche, d'un côté, sur la première section et, de l'autre côté, sur l'une des troisièmes sections, et dans lequel chacune desdites troisièmes sections possède au moins une extrémité débouchant au niveau d'un des canaux longitudinaux de circulation de fluide.
- la troisième section ou chacune des troisièmes sections possède au moins une autre extrémité débouchant au niveau d'une face latérale externe du flasque de bobinage avant, respectivement arrière, qui fait face aux bobinages.
- le flasque de bobinage avant, respectivement arrière, possède une face latérale interne en contact avec la face latérale avant, respectivement arrière, du paquet de tôles, ladite face latérale interne étant munie d'une cavité dans laquelle vient se loger un couvercle, ladite cavité étant configurée pour former au moins partiellement, en combinaison avec ledit couvercle, le ou les canaux de liaison avant, respectivement arrière.
- la cavité comprend une partie centrale de forme annulaire, qui s'étend radialement depuis une zone centrale évidée du flasque de bobinage avant, respectivement arrière, ladite zone centrale étant configurée pour loger partiellement l'arbre du rotor, et de plusieurs extensions radiales s'étendant radialement depuis ladite partie centrale, chacune des extensions radiales étant alignées avec une des branches radiales du flasque de bobinage avant, respectivement arrière.
- la cavité est délimitée par une paroi de fond et par plusieurs parois latérales orientées perpendiculairement à ladite paroi de fond, ladite paroi de fond étant munie de premières rainures orientées radialement par rapport à l'axe de l'arbre et de deuxièmes rainures orientées de manière orthoradiale par rapport à l'axe de l'arbre, lesdites premières et deuxièmes rainures formant respectivement, en combinaison avec des rainures correspondantes du couvercle, les premières et deuxièmes sections des canaux de liaison avant, respectivement arrière.
- plusieurs parois latérales, qui sont orientées radialement par rapport à l'axe de l'arbre, sont munies de troisièmes rainures orientées parallèlement à l'axe de l'arbre, lesdites troisièmes rainures formant, en combinaison avec des rainures correspondantes du couvercle, au moins une partie des troisièmes sections des canaux de liaison avant, respectivement arrière.
- la cavité est configurée pour former des logements disposés radialement autour de la partie centrale, chacun des logements possédant une forme spécifique et étant destiné à recevoir un élément de liaison correspondant du couvercle possédant une forme complémentaire à celle dudit logement, ladite forme spécifique et ladite forme complémentaire étant configurées pour empêcher tout déplacement relatif entre le couvercle et le flasque de bobinage avant, respectivement arrière, selon une direction radiale, sécurisant ainsi le couplage du couvercle sur le flasque de bobinage avant, respectivement arrière.
- les logements de la cavité possèdent une forme en queue d'aronde.
- les canaux longitudinaux de circulation de fluide sont définis au moins partiellement par des rainures formées le long des surfaces externes du paquet de tôles qui sont en contact avec les isolants de paquet de tôles.
- les canaux longitudinaux de circulation de fluide sont définis au moins partiellement par des rainures formées le long de surfaces internes des isolants de paquet de tôles qui sont en contact avec le paquet de tôles.

L'invention concerne également un moteur électrique comprenant un rotor bobiné tel que défini ci-dessus.

L'invention sera davantage comprise à la lecture de la description non limitative qui va suivre, faite en référence aux figures ci-annexées.
[Fig. 1] est une vue en perspective d'un moteur électrique équipé d'un rotor bobiné selon l'invention, le moteur étant vu depuis son côté avant,
[Fig. 2] est une vue similaire à la figure 1, le moteur étant vu depuis son côté arrière,
[Fig. 3] est une vue en coupe longitudinale du moteur des figures 1 et 2,
[Fig. 4] est une vue en perspective du rotor bobiné équipant le moteur des figures 1 et 2,
[Fig. 5a] est une vue en perspective du paquet de tôles recouvert d'isolants de paquets de tôles équipant le rotor de la figure 4,
[Fig. 5b] est une vue similaire à la figure 5a selon une première variante de réalisation du paquet de tôles et des isolants de paquet de tôles,
[Fig. 5c] est une vue similaire à la figure 5a selon une deuxième variante de réalisation des isolants de paquet de tôles,
[Fig. 6] est une vue en coupe longitudinale et en perspective du rotor de la figure 4, le paquet de tôles et les bobinages ayant été retirés,
[Fig. 7] est une vue axiale d'un des flasques de bobinage équipant le rotor de la figure 4,
[Fig. 8] est une vue en perspective de la face interne du flasque représenté sur la figure 7, le couvercle ayant été retiré,
[Fig. 9] est une vue en perspective de la face externe du flasque représenté sur la figure 7, le couvercle ayant été retiré,
[Fig. 10] est une vue en perspective de la face externe du couvercle du flasque représenté sur la figure 7,
[Fig. 11] est une vue en perspective de la face interne du couvercle du flasque représenté sur la figure 7.

Dans l'ensemble de la description et dans les revendications, les termes « axial » et « radial » et leurs dérivés sont définis par rapport à l'axe de rotation du rotor. Ainsi, une orientation axiale se rapporte à une orientation parallèle à l'axe de rotation du rotor et une orientation radiale se rapporte à une orientation perpendiculaire à l'axe de rotation du rotor. Par ailleurs, par convention, les termes « avant » et « arrière » font référence à des positions séparées le long de l'axe de rotation du rotor. En particulier, l'extrémité « avant » de l'arbre du rotor correspond à l'extrémité de l'arbre sur laquelle peut être fixé(e) une poulie, un pignon, une cannelure destiné(e) à transmettre le mouvement de rotation du rotor à tout autre dispositif similaire de transmission de mouvements.

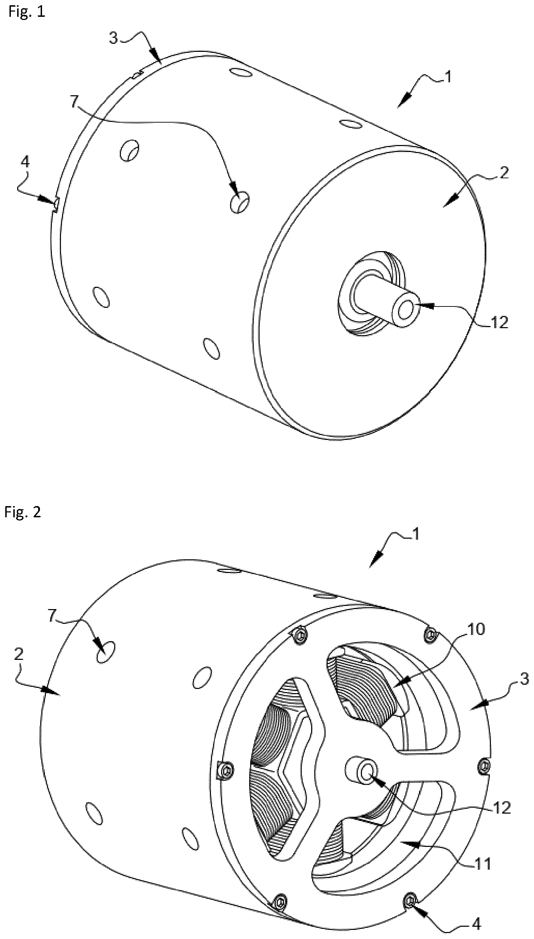

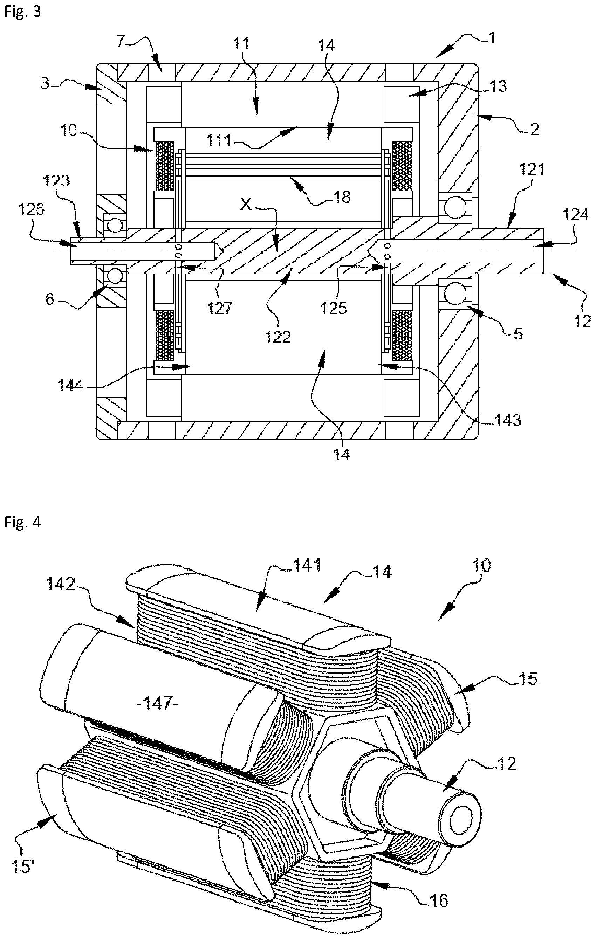

Les figures 1 à 3 représentent un moteur électrique 1 selon l'invention comprenant deux paliers, respectivement un palier avant 2 en forme de cloche et un palier arrière 3 en forme de disque, reliées ensemble au moyens de vis 4, le palier avant 2 logeant un rotor 10 solidaire en rotation d'un arbre 12 et un stator 11 annulaire qui entoure le rotor 10 de manière coaxiale à l'arbre 12. Comme représenté en figure 3, les paliers avant et arrière 2, 3 portent chacun centralement un roulement à billes respectivement 5 et 6 pour le montage en rotation de l'arbre 12. Des chignons 13 font saillie axialement de part et d'autre du stator 11 et sont logés dans l'espace intermédiaire séparant le stator 11 des paliers respectifs 2, 3. Les paliers avant et arrière 2, 3 seront avantageusement constitués de métal. Dans la configuration représentée, le palier avant 2 est muni d'une série d'ouvertures 7 qui serviront pour l'évacuation d'un fluide de refroidissement à l'extérieur du moteur 1. Ce fluide de refroidissement pourra pénétrer à l'intérieur de l'espace interne défini par les paliers avant et arrière 2, 3 via un premier canal interne 124 de circulation, dit canal d'entrée de fluide, et un deuxième canal interne 126 de circulation d'un fluide de refroidissement, dit canal de sortie de fluide. Les canaux d'entrée et de sortie de fluide 124, 126 sont respectivement définis par des trous borgnes alignés selon l'axe X de l'arbre 12 et formé à travers des portions d'extrémité avant 121 et arrière 123 de l'arbre 12, lesdites portions d'extrémités 121, 123 étant séparées par une portion centrale pleine 122.

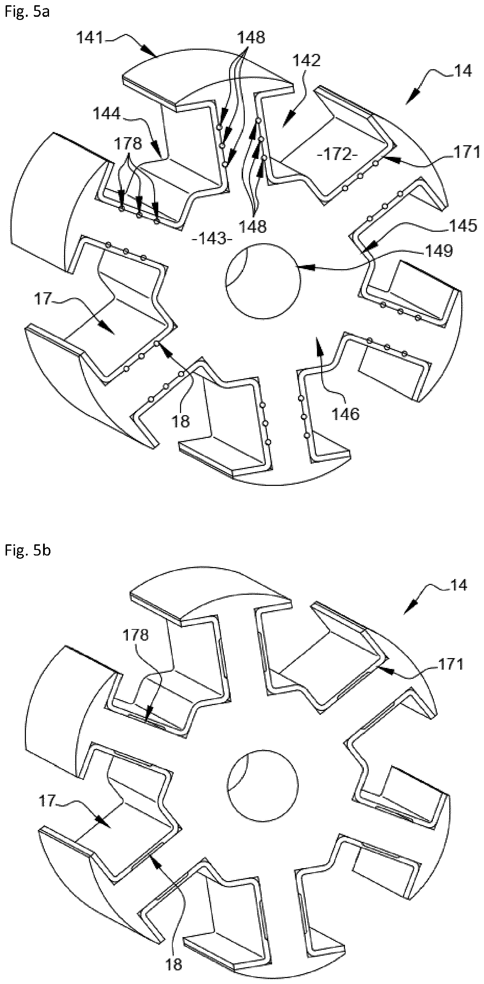

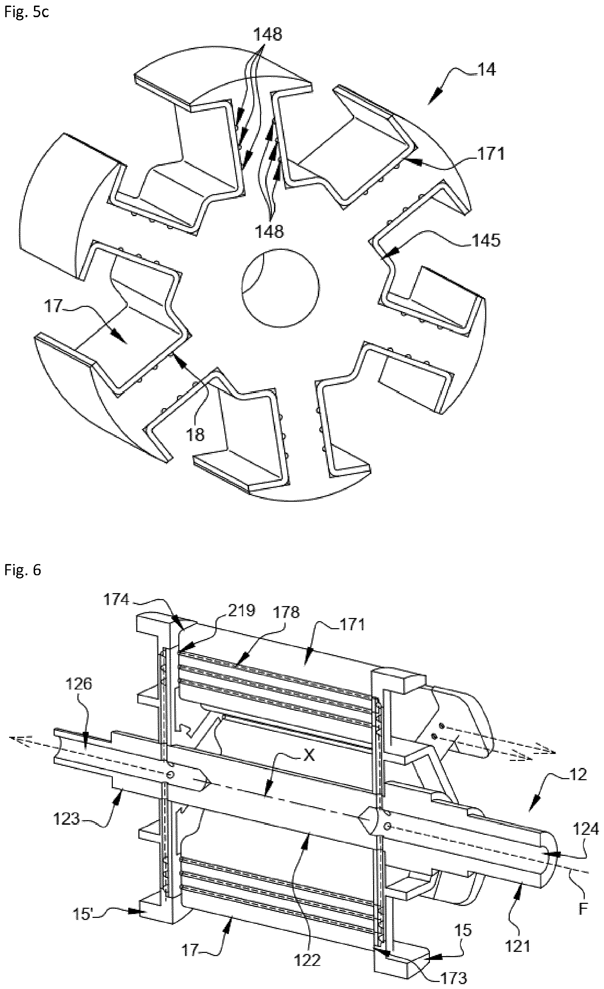

Le rotor 10 équipant le moteur 1 des figures 1 à 3 est représenté sur les figures 4 et 6. Le rotor 10 est de type bobiné et comprend notamment un paquet de tôles 14 (représenté sur la figure 5a) formé d'un empilement axial de tôles qui s'étendent dans un plan radial perpendiculaire à l'axe X de l'arbre 12. Le paquet de tôles 14 est monté coaxialement sur l'arbre 12. L'arbre 12 pourra être emmanché en force à l'intérieur d'une ouverture centrale du paquet de tôles 14 de manière à lier en rotation le corps du rotor avec l'arbre 12. Le paquet de tôles 14 s'étend entre une face latérale avant 143 et une face latérale arrière 144 et présente une alternance circonférentielle de pôles 141 et d'espaces interpolaires 142. Les espaces interpolaires 142 s'étendent entre deux pôles 141 adjacents et forment des évidements s'étendant sur toute la longueur du paquet de tôles 14, entre les deux pôles adjacents 141.

Dans la configuration représentée, les pôles 141 sont au nombre de 6 et sont disposés autour de l'arbre 12 de manière à être régulièrement espacés, deux pôles 141 adjacents étant espacés par un angle de 60° environ. Les pôles 141 s'étendent radialement depuis une partie annulaire 146 du paquet de tôles 14 pourvue d'une ouverture centrale 149 configurée pour loger partiellement l'arbre 12 du rotor. Chaque pôle 141 possède un profil en forme de T dans un plan orthogonal à l'axe X et présente, dans la direction radiale, une section étroite prolongée par une section élargie de forme bombée. La section élargie bombée présente une surface périphérique externe 147 qui, dans la position montée du rotor 10, fait face à une surface périphérique interne 111 du stator 11 (voir figure 3), ladite surface périphérique externe 147 étant espacée de ladite surface périphérique interne 111 par une distance inférieure à 1 mm.

Chaque pôle 141 reçoit un bobinage 16 longitudinal destiné à générer un flux magnétique dans le pôle rotorique. Les bobinages 16 sont enroulés autour des pôles 141 et autour de flasques de bobinage avant 15 et arrière 15' qui enserrent axialement le paquet de tôles 14. Ces flasques de bobinage 15, 15' sont montés coaxialement sur l'arbre 12 du rotor et agencés axialement de part et d'autre du paquet de tôles 14 de telle sorte à être contigus respectivement aux faces latérales avant et arrière 143, 144 du paquet de tôles 14.

Comme représenté sur la figure 5a, des isolants de paquet de tôles 17 sont disposés de manière à recouvrir les surfaces latérales externes 145 du paquet de tôles 14 qui définissent les espaces interpolaires 142. Ces isolants de paquet de tôles 17 sont configurés pour prévenir l'établissement d'un court-circuit entre les bobinages 16 et les pôles 141 du paquet de tôles. Les isolants de paquet de tôles 17 sont habituellement réalisés à partir de matériaux diélectriques, par exemple à base de matière plastique. Chaque isolant de paquet de tôles 17 possède une face interne 171 en contact avec une surface latérale externe 145 du paquet de tôles 14 et une face externe 172 qui est opposée à la face interne 171, lesdites faces interne et externe 171, 172 s'étendant axialement entre un bord d'extrémité avant 173 et un bord d'extrémité arrière 174 (voir figure 6).

Les isolants de paquet de tôles 17 et les surfaces latérales externes 145 du paquet de tôles 14 sont configurés pour former des canaux longitudinaux 18 de circulation de fluide, qui s'étendent axialement le long du paquet de tôles 14 (voir figure 3) de telle sorte qu'ils débouchent, à l'une de leurs extrémités, au niveau de la face latérale avant 143 du paquet de tôles 14 et, à une autre de leurs extrémités, au niveau de la face latérale arrière 144 dudit paquet de tôles 14. Ces canaux longitudinaux 18 permettront ainsi de faire circuler un fluide de refroidissement le long du paquet de tôles 14, évacuant de cette façon la chaleur emmagasinée par ce paquet de tôles lors du fonctionnement du moteur.

Ces canaux longitudinaux 18 de circulation de fluide sont définis, dans la variante de réalisation représentée sur la figure 5a, par la combinaison de rainures 148 formées axialement le long des surfaces latérales externes 145 du paquet de tôles 14 et de rainures 178 formées axialement le long des faces internes 171 des isolants de paquet de tôles 17, lesdites rainures 148, 178 se faisant face par paire. Dans cette variante, les canaux longitudinaux 18 de circulation de fluide sont au nombre de six pour chacun des pôles 141, lesdits canaux 18 étant disposés angulairement autour de l'arbre 12 en plusieurs groupes de trois canaux alignés selon une même direction radiale.

Cette variante de réalisation n'est évidemment qu'un exemple non limitatif pour l'invention. Il sera notamment envisageable de réduire ou d'augmenter le nombre de canaux 18 par encoche et/ou de former les canaux 18 uniquement au moyen de rainures 148 formées le long des surfaces latérales externes 145 du paquet de tôles 14 ou uniquement au moyen de rainures 178 formées le long des faces internes 171 des isolants de paquet de tôles 17.

Ainsi, dans la variante de réalisation représentée sur la figure 5b, les canaux 18 sont au nombre de deux par encoche et sont définis uniquement au moyen de rainures 178 formées axialement le long des faces internes 171 des isolants de paquet de tôles 17, tandis que dans la variante de réalisation représentée sur la figure 5c, les canaux 18 sont toujours au nombre de six par encoche mais les canaux 18 sont définis ici uniquement au moyen de rainures 148 formées le long des surfaces latérales externes 145 du paquet de tôles 14.

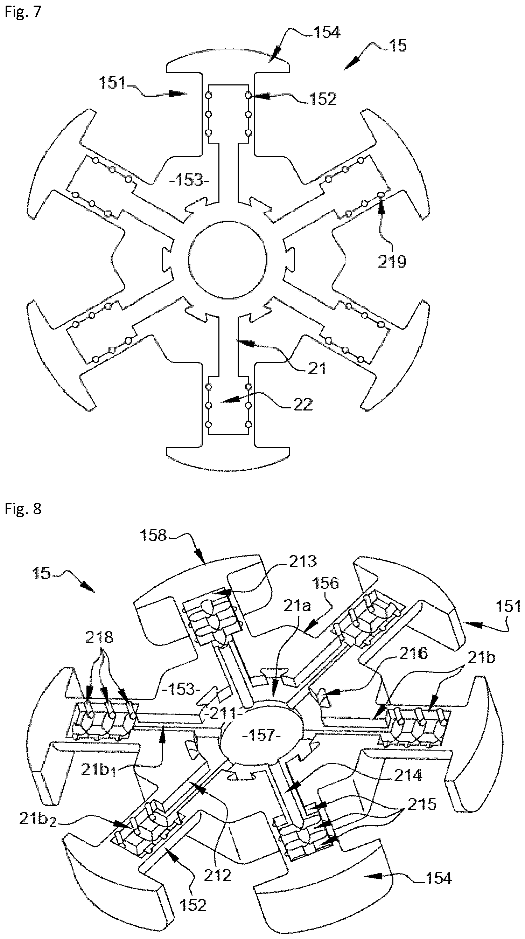

En référence à la figure 7, il est représenté la face latérale interne 153 du flasque de bobinage avant 15 qui est orientée vers le paquet de tôles 14. Les flasques de bobinage avant et arrière 15 et 15' possédant le même profil, les détails de structure donnés ci-dessous en référence à la figure 7 s'appliquent également au flasque de bobinage arrière 15'. Le flasque de bobinage avant 15 possède une série de branches radiales 151 en forme de T. Chacune des branches radiales 151 est alignée axialement avec un des pôles 141 du paquet de tôles 14 et présente, dans la configuration préférentielle représentée sur la figure 4, un profil similaire ou identique à celui du pôle 141 avec lequel elle est alignée dans un plan orthogonal à l'axe X de l'arbre 12. Ainsi, chaque branche radiale 151 présente, dans la direction radiale, une section étroite 152 prolongée par une section élargie 154 de forme bombée.

Le flasque de bobinage avant 15 est par ailleurs muni d'une cavité centrale 21 dans laquelle vient se loger un couvercle 22. Comme décrit en détail dans les paragraphes suivants, la cavité 21 et le couvercle 22 sont configurés pour former au moins un canal de liaison fluidique, et, de préférence, une pluralité de canaux de liaison fluidique, à l'intérieur du flasque de bobinage avant 15, ce ou ces canaux de liaison fluidique communiquant de manière fluidique avec le canal d'entrée de fluide 124 de l'arbre 12 et avec les canaux longitudinaux 18 de circulation de fluide traversant le paquet de tôles 14. Ce ou ces canaux de liaison fluidique pourront avantageusement déboucher au niveau d'ouvertures de sortie de fluide situées à la périphérie externe dudit flasque de bobinage avant 15 et orientées vers les bobinages 16. De façon similaire, le flasque de bobinage arrière 15' est muni d'une cavité centrale 21 dans laquelle vient se loger un couvercle 22, ladite cavité 21 et ledit couvercle 22 étant configurés pour former au moins un canal de liaison fluidique, et, de préférence, une pluralité de canaux de liaison fluidique, à l'intérieur du flasque de bobinage arrière 15', ce ou ces canaux de liaison fluidique communiquant de manière fluidique avec le canal de sortie de fluide 126 de l'arbre 12 et avec les canaux longitudinaux 18 de circulation de fluide traversant le paquet de tôles 14. Ce ou ces canaux de liaison fluidique déboucheront avantageusement au niveau d'ouvertures de sortie de fluide situées à la périphérie externe dudit flasque de bobinage arrière 15' et orientées vers les bobinages 16. Dans la suite de la description, et par convention, le ou les canaux de liaison fluidique formés à l'intérieur du flasque de bobinage avant 15 seront appelées canaux de liaison avant et le ou les canaux de liaison fluidique formés à l'intérieur du flasque de bobinage arrière 15' seront appelées canaux de liaison arrière.

Ainsi, comme représenté sur la figure 6, un fluide de refroidissement F alimenté depuis le canal d'entrée de fluide 124 pourra circuler à l'intérieur du flasque de bobinage avant 15 via ledit ou lesdits canaux de liaison avant, puis pourra soit être projeté en direction des bobinages 16 entourant le flasque de bobinage avant 15, permettant ainsi un refroidissement efficace desdits bobinages 16, soit circuler le long du paquet de tôles 14 au travers d'au moins l'un des canaux longitudinaux 18 de circulation de fluide, puis pourra circuler à l'intérieur du flasque de bobinage arrière 15' au travers dudit ou desdits canaux de liaison arrière, et finalement pourra soit être projeté en direction des bobinages 16 entourant le flasque de bobinage arrière 15', soit sortir du moteur au travers du canal de sortie de fluide 126.

La configuration particulière du flasque de bobinage avant 15 et de son couvercle 22 associé telle que représentée sur la figure 6 est décrite en détail ci-dessous, en référence aux figures 8 à 11. Le flasque de bobinage arrière 15' possédant une structure sensiblement identique à celle du flasque de bobinage avant 15, les détails techniques donnés ci-dessous s'appliqueront de manière similaire au flasque de bobinage arrière 15' et à son couvercle associé.

Ainsi, le flasque de bobinage avant 15 définit sensiblement une structure en forme d'étoile comprenant une partie centrale 156 de forme hexagonale prolongée sur chacun de ses côtés par les branches radiales 151 en forme de T. La partie centrale 156 possède une zone centrale 157 évidée, qui est configurée pour loger partiellement l'arbre 12 du rotor.

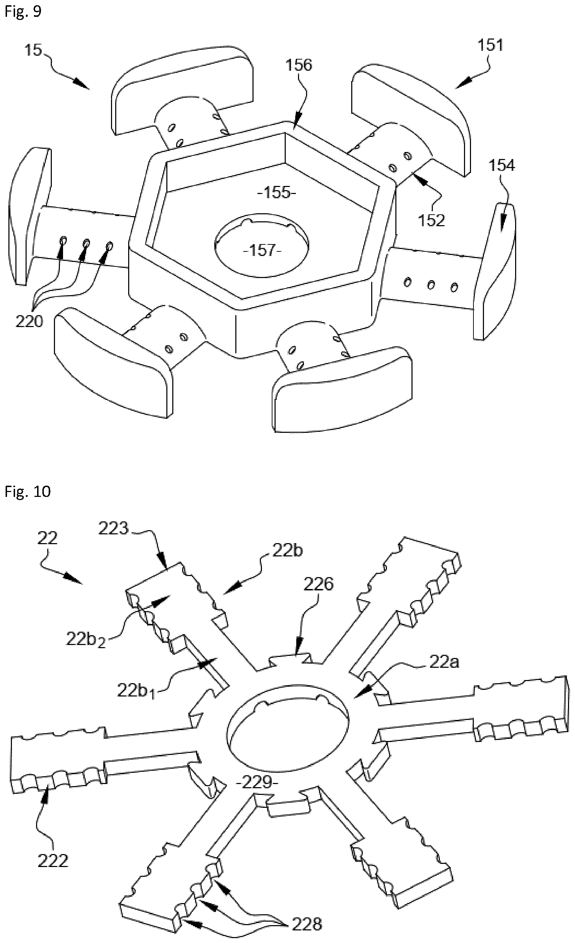

Le flasque de bobinage avant 15 possède une face latérale interne 153 (visible sur la figure 8) et une face latérale externe 155 (visible sur la figure 9). La face latérale interne 153 est en contact avec la face latérale avant 143 du paquet de tôles 14 et la face latérale externe 155 est orientée vers le palier avant 2.

La face latérale externe 155 est configurée pour définir entre la section élargie 154 de chaque branche radiale 151 et la partie centrale 156 un espace radial permettant de loger les bobinages 16.

La face latérale interne 153, majoritairement plane, est munie d'une cavité centrale 21 qui s'étend radialement depuis la zone centrale 157 en direction des faces périphériques externes 158 du flasque de bobinage avant 15, qui sont définies par les côtés extérieurs courbes des sections élargies 154 des branches radiales 151.

La cavité 21 comprend notamment une partie centrale 21a de forme annulaire, qui jouxte la zone centrale 157, et plusieurs extensions radiales 21b s'étendant radialement depuis ladite partie centrale 21a. Chacune des extensions radiales 21b est alignée avec une des branches radiales 151 du flasque de bobinage avant 15 et comprend une portion étroite 21b1 prolongée radialement par une portion élargie 21b2.

La cavité 21 est notamment délimitée par une paroi de fond 211, par plusieurs parois latérales 212 orientées radialement par rapport à l'axe X, et par plusieurs parois latérales 213 orientées orthoradialement par rapport à l'axe X.

La paroi de fond 211 est munie de premières rainures 214 orientées radialement par rapport à l'axe X et de deuxièmes rainures 215 orientées de manière orthoradiale par rapport à l'axe X. Les parois latérales 212 sont, quant à elles, munies de troisièmes rainures 218 orientées parallèlement à l'axe X, chacune des troisièmes rainures 218 débouchant, à une première extrémité, sur une première ouverture axiale de sortie de fluide 219 (voir figures 6 et 7) située sur la face latérale interne 153 du flasque de bobinage 15 et débouchant sur un des canaux longitudinaux 18 du paquet de tôles 14, et, à une deuxième extrémité, sur une deuxième ouverture axiale de sortie de fluide 220 située sur la face latérale externe 155 du flasque de bobinage 15, au niveau de l'espace radial qui sert de logement aux bobinages 16.

Dans la configuration représentée, les premières rainures 214 sont au nombre de 6, chacune des premières rainures 214 étant formée à travers la partie centrale 21a et les portions étroite et élargie d'une des extensions radiales 21b et s'étendant depuis une première extrémité jouxtant la zone centrale 157 jusqu'à une deuxième extrémité située au niveau d'une des parois latérales 213 de la cavité 21.

Dans la configuration représentée, les deuxièmes rainures 215 sont au nombre de 36, chacune des deuxièmes rainures 215 étant formée à travers la portion élargie 21b2 d'une des extensions radiales 21b et s'étendant depuis une première extrémité jouxtant une des premières rainures 214 jusqu'à une deuxième extrémité située au niveau d'une des parois latérales 212 de la cavité 21. Cette deuxième extrémité débouche sur une des troisièmes rainures 218.

Les premières, deuxièmes et troisièmes rainures 214, 215 et 218 sont configurées pour former, en combinaison avec des rainures correspondantes du couvercle avant 22, les canaux de liaison avant du flasque de bobinage avant 15.

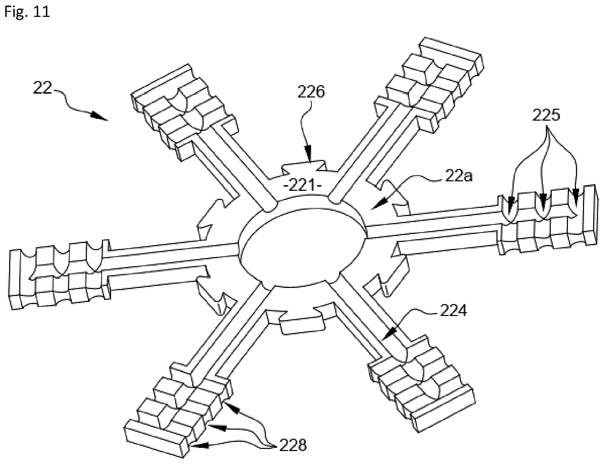

A cet effet, et comme représenté sur les figures 10 et 11, le couvercle 22 possède une forme complémentaire à la cavité 21 du flasque de bobinage 15.

Le couvercle 22 comprend notamment une partie centrale 22a de forme annulaire destinée à s'emboiter à l'intérieur de la partie centrale 21a de la cavité 21. De manière à sécuriser le couplage du couvercle 22 sur le flasque de bobinage 15, le couvercle 22 est avantageusement muni de nervures 226 en queue d'aronde formant des saillies à la périphérie externe de la partie centrale 22a du couvercle 22, lesdites nervures 226 possédant une forme complémentaire à celle de formes en creux 216 correspondantes du flasque de bobinage 15 (voir figure 8), chacune desdites formes en creux 216 étant destinée à loger une desdites nervures 226.

Le couvercle 22 comprend également plusieurs extensions radiales 22b s'étendant radialement depuis la partie centrale 22a. Chacune des extensions radiales 22b comprend une portion étroite 22b1 prolongée radialement par une portion élargie 22b2. Les extensions radiales 22b sont destinées à venir s'emboîter à l'intérieur des extensions radiales 21b de la cavité 21.

Le couvercle 22 est notamment délimité par une paroi interne 221, qui est en contact avec la paroi de fond 211 de la cavité 21, par une paroi externe 229, qui est opposée à la paroi interne 221, par plusieurs parois latérales 222, qui sont en contact avec les parois latérales 212 de la cavité 21, et par plusieurs parois latérales 223, qui sont en contact avec les parois latérales 213 de la cavité 21.

La paroi interne 221 est munie de premières rainures 224 orientées radialement par rapport à l'axe X et formant, en combinaison avec les premières rainures 214 de la cavité 21, des premières sections des canaux de liaison avant. Chacune desdites premières sections débouche, à son extrémité proximale, sur un trou traversant 125 formé à l'intérieur de l'arbre 12 et orienté radialement par rapport à l'axe X (voir figure 3), ledit trous 125 étant formé à l'intérieur de la portion d'extrémité avant 121 de manière à déboucher, d'un côté, dans le canal d'entrée de fluide 124 et, de l'autre côté, au niveau de la paroi périphérique de l'arbre 12. De manière similaire, plusieurs trous 127 orientés radialement par rapport à l'axe X de l'arbre 12 sont formés à l'intérieur de la portion d"extrémité arrière 123 de manière à déboucher, d'un côté, dans le canal de sortie de fluide 126 et, de l'autre côté, au niveau de la paroi périphérique de l'arbre. Ces trous 125, 127 permettront d'alimenter en fluide les canaux liaison avant et arrière des flasques de bobinage avant et arrière 15, 15' respectivement.

La paroi interne 221 est également munie de deuxièmes rainures 225 orientées de manière orthoradiale par rapport à l'axe X et formant, en combinaison avec les deuxièmes rainures 215 de la cavité 21, des deuxièmes sections des canaux de liaison avant ou arrière, lesdites deuxièmes sections étant en communication fluidique avec lesdites premières sections.

Les parois latérales 222 du couvercle 22 sont, quant à elles, munies de troisièmes rainures 228 orientées parallèlement à l'axe X et formant, en combinaison avec les troisièmes rainures 218 de la cavité 21, des troisièmes sections des canaux de liaison avant ou arrière, lesdites troisièmes sections étant en communication fluidique avec lesdites deuxièmes sections. Chacun desdites troisièmes sections débouche ainsi, d'un côté, sur la première ouverture axiale de sortie 219 et, de l'autre côté, sur la deuxième ouverture axiale de sortie 220.

Ainsi configurés, le rotor 10 et le moteur 1 pourront être refroidis par un fluide de refroidissement, comme de l'huile ou de l'air sous pression par exemple, ledit fluide de refroidissement circulant dans le rotor 10 successivement au travers du canal d'entrée de fluide 124, puis à l'intérieur du flasque de bobinage avant 15 au travers, successivement, des premières, deuxièmes et troisièmes sections des canaux de liaison avant, puis entre le paquet de tôles 14 et les isolants de paquet de tôles 17 au travers des canaux longitudinaux 18, puis à l'intérieur du flasque de bobinage arrière 15' au travers, successivement, des troisièmes, deuxièmes et premières sections des canaux de liaison arrière, pour finalement être expulsé hors du moteur 1 au travers du canal de sortie de fluide 126. Au cours de son trajet à l'intérieur du rotor 10, le fluide de refroidissement peut ainsi extraire une partie de la chaleur emmagasinée par le paquet de tôles 14.

Par ailleurs, le fluide de refroidissement pourra également être projeté sur les bobinages 16 au travers des deuxièmes ouvertures axiales 220 de telle sorte que, une fois au contact des bobinages 16, il peut extraire une partie de la chaleur emmagasinée par lesdits bobinages 16. Le fluide de refroidissement ainsi projeté circule ensuite à l'intérieur du stator 11, avant d'être évacué hors du moteur 1 via les ouvertures 7.

L'invention n'est évidemment pas limitée aux modes de réalisation tels que décrits précédemment. En particulier, dans d'autres modes de réalisation (non représentés) de l'invention, les flasques de bobinage avant et/ou arrière 15, 15' pourront également être munis de canaux radiaux de sortie de fluide débouchant au niveau d'ouvertures radiales de sortie situées à la périphérie externe desdits flasques de bobinage avant et/ou arrière, chacun desdits canaux radiaux de sortie de fluide étant en communication fluidique avec ledit ou lesdits canaux de liaison avant ou arrière et étant orienté vers les chignons dépassant à l'avant ou à l'arrière du stator. Par ailleurs, la présence d'un couvercle 22 logé à l'intérieur d'une cavité centrale 21 du flasque de bobinage avant 15, respectivement arrière 15', n'est qu'une possibilité pour former les canaux de circulation de fluide. Dans d'autres modes de réalisation de l'invention, il est envisageable de ne pas prévoir un tel couvercle et une telle cavité.

## Revendications

1. Rotor (10) bobiné pour moteur électrique (1) comprenant :
- un arbre (12) de rotor monté rotatif autour d'un axe (X);
- un paquet de tôles (14) monté coaxialement sur l'arbre (12) de rotor, ledit paquet de tôles (14) s'étendant entre une face latérale avant (143) et une face latérale arrière (144) et présentant une alternance de pôles (141) et d'espaces interpolaires (142),
- des isolants de paquet de tôles (17) disposés de manière à recouvrir au moins partiellement des surfaces externes (145) du paquet de tôles (14) définissant les espaces interpolaires (142), lesdits isolants de paquet de tôles (17) et lesdites surfaces externes (145) étant configurés pour former, entre eux, des canaux longitudinaux (18) de circulation de fluide, lesdits canaux longitudinaux (18) de circulation de fluide s'étendant axialement le long du paquet de tôles (14) de telle sorte qu'ils débouchent, à l'une de leurs extrémités, au niveau de la face latérale avant (143) dudit paquet de tôles (14) et, à une autre de leurs extrémités, au niveau de la face latérale arrière (144) dudit paquet de tôles (14), lesdits canaux longitudinaux (18) de circulation de fluide étant configurés pour permettre la circulation d'un fluide de refroidissement;
- un flasque de bobinage avant (15) et un flasque de bobinage arrière (15') montés coaxialement sur l'arbre (12) de rotor et agencés axialement de part et d'autre du paquet de tôles (14) de telle sorte à être contigus respectivement aux faces latérales avant et arrière (143, 144) du paquet de tôles (14), lesdits flasques de bobinage avant et arrière (15, 15') présentant chacun une série de branches radiales (151) en forme de T, chacune desdites branches radiales (151) étant alignée axialement avec un des pôles (141) du paquet de tôles (14) et présentant, de préférence, un profil similaire ou identique à celui dudit pôle (141) dans un plan perpendiculaire à l'axe (X) de l'arbre ;
- des bobinages (16) entourant partiellement les isolants de paquet de tôles (17) et les branches radiales (151) des flasques de bobinage avant et arrière (15, 15') ;
dans lequel l'arbre (12) est muni d'au moins un premier canal interne (124) de circulation d'un fluide de refroidissement, dit canal d'entrée de fluide, et d'au moins un deuxième canal interne (126) de circulation d'un fluide de refroidissement, dit canal de sortie de fluide, et en ce que le flasque de bobinage avant (15), respectivement le flasque de bobinage arrière (15'), est traversé par au moins un canal de liaison avant, respectivement arrière, à l'intérieur duquel peut circuler un fluide de refroidissement, ledit au moins un canal de liaison avant, respectivement arrière, étant en communication fluidique avec l'un desdits canaux d'entrée de fluide (124) et de sortie de fluide (126) et avec au moins l'un desdits canaux longitudinaux (18) de circulation de fluide.

2. Rotor (10) bobiné selon la revendication 1, **caractérisé en ce que** ledit au moins un canal de liaison avant est en communication fluidique avec le canal d'entrée de fluide (124) et ledit au moins un canal de liaison arrière est en communication fluidique avec le canal de sortie de fluide (126), de telle sorte qu'un fluide destiné au refroidissement du rotor puisse circuler dans le rotor successivement au travers du canal d'entrée de fluide (124), puis à l'intérieur du flasque de bobinage avant (15) au travers dudit au moins un canal de liaison avant, puis le long du paquet de tôles (14) au travers d'au moins l'un des canaux longitudinaux (18) de circulation de fluide, puis à l'intérieur du flasque de bobinage arrière (15') au travers dudit au moins un canal de liaison arrière, et finalement au travers du canal de sortie de fluide (126).

3. Rotor (10) bobiné selon la revendication 2, **caractérisé en ce que** l'arbre (12) comprend une portion d'extrémité avant (121) et une portion d'extrémité arrière (123) séparée de la portion d'extrémité avant (121) par une portion centrale (122) pleine, la portion d'extrémité avant (121), respectivement la portion d'extrémité arrière (123), étant traversée par une cavité centrale de forme cylindrique, ladite cavité centrale formant le canal d'entrée de fluide (124), respectivement le canal de sortie de fluide (126), de l'arbre (12), et **en ce qu'**au moins un trou de liaison (125, 127) orienté radialement par rapport à l'axe (X) de l'arbre (12) est formé à l'intérieur de la portion d'extrémité avant (121), respectivement de la portion d'extrémité arrière (123), de manière à déboucher d'un côté dans le canal d'entrée de fluide (124), respectivement dans le canal de sortie de fluide (126), et de l'autre côté dans ledit au moins un canal de liaison avant, respectivement dans ledit au moins un canal de liaison arrière.

4. Rotor (10) bobiné selon l'une des revendications précédentes, **caractérisé en ce que** ledit au moins un canal de liaison avant, respectivement arrière, comprend au moins une premier section (214, 224) orientée radialement par rapport l'axe (X) de l'arbre, au moins une deuxième section (215, 225) orientée de manière orthoradiale par rapport à l'axe (X) de l'arbre, et au moins une troisième section (218, 228) orientée de manière parallèle à l'axe (X) de l'arbre, dans lequel ladite au moins une première section (214, 224) possède au moins une extrémité jouxtant l'arbre (12) de rotor, dans lequel ladite au moins une deuxième section (215, 225) débouche, d'un côté, sur ladite au moins une première section (214, 224) et, de l'autre côté, sur ladite au moins une troisième section (218, 228), et dans lequel ladite au moins une troisième section (218, 228) possède au moins une extrémité débouchant au niveau d'un des canaux longitudinaux (18) de circulation de fluide.

5. Rotor (10) bobiné selon l'une des revendications précédentes, **caractérisé en ce que** le flasque de bobinage avant (15), respectivement arrière (15'), est traversé par une pluralité de canaux de liaison avant, respectivement arrière, chacun desdits canaux de liaison avant, respectivement arrière, comprend une première section (214, 224) orientée radialement par rapport à l'axe (X) de l'arbre, plusieurs deuxièmes sections (215, 225) orientées de manière orthoradiale par rapport à l'axe (X) de l'arbre, et plusieurs troisièmes sections (218, 228) orientées de manière parallèle à l'axe (X) de l'arbre, dans lequel ladite première section (214, 224) possède au moins une extrémité jouxtant l'arbre (14) de rotor, dans lequel chacune desdites deuxièmes sections (215, 225) débouche, d'un côté, sur la première section (214, 224) et, de l'autre côté, sur l'une des troisièmes sections (218, 228), et dans lequel chacune desdites troisièmes sections (218, 228) possède au moins une extrémité débouchant au niveau d'un des canaux longitudinaux (18) de circulation de fluide.

6. Rotor (10) bobiné selon la revendication 4 ou 5, **caractérisé en ce que** la troisième section (218, 228) ou chacune des troisièmes sections (218, 228) possède au moins une autre extrémité (220) débouchant au niveau d'une face latérale externe (155) du flasque de bobinage avant (15), respectivement arrière (15'), qui fait face aux bobinages (16).

7. Rotor (10) bobiné selon l'une des revendications 4 à 6, **caractérisé en ce que** le flasque de bobinage avant (15), respectivement arrière (15'), possède une face latérale interne (153) en contact avec la face latérale avant (143), respectivement arrière (144), du paquet de tôles (14), ladite face latérale interne (153) étant munie d'une cavité (21) dans laquelle vient se loger un couvercle (22), ladite cavité (21) étant configurée pour former au moins partiellement, en combinaison avec ledit couvercle (22), le ou les canaux de liaison avant, respectivement arrière.

8. Rotor (10) bobiné selon la revendication 7, **caractérisé en ce que** la cavité (21) comprend une partie centrale (21a) de forme annulaire, qui s'étend radialement depuis une zone centrale (157) évidée du flasque de bobinage avant (15), respectivement arrière (15'), ladite zone centrale (157) étant configurée pour loger partiellement l'arbre (12) du rotor, et de plusieurs extensions radiales (21b) s'étendant radialement depuis ladite partie centrale (21a), chacune des extensions radiales (21b) étant alignées avec une des branches radiales (151) du flasque de bobinage avant (15), respectivement arrière (15').

9. Rotor (10) bobiné selon la revendication 8, **caractérisé en ce que** la cavité (21) est délimitée par une paroi de fond (211) et par plusieurs parois latérales (212, 213) orientées perpendiculairement à ladite paroi de fond (211), ladite paroi de fond (211) étant munie de premières rainures (214) orientées radialement par rapport à l'axe (X) de l'arbre et de deuxièmes rainures (215) orientées de manière orthoradiale par rapport à l'axe (X) de l'arbre, lesdites premières et deuxièmes rainures (214, 215) formant respectivement, en combinaison avec des rainures (224, 225) correspondantes du couvercle (22), les premières et deuxièmes sections (214, 224, 215, 225) des canaux de liaison avant, respectivement arrière.

10. Rotor (10) bobiné selon la revendication 9, **caractérisé en ce que** plusieurs parois latérales (212), qui sont orientées radialement par rapport à l'axe (X) de l'arbre, sont munies de troisièmes rainures (218) orientées parallèlement à l'axe (X) de l'arbre, lesdites troisièmes rainures (218) formant, en combinaison avec des rainures (228) correspondantes du couvercle (22), au moins une partie des troisièmes sections (218, 228) des canaux de liaison avant, respectivement arrière.

11. Rotor (10) bobiné selon l'une des revendications 8 à 10, **caractérisé en ce que** la cavité (21) est configurée pour former des logements (216) disposés radialement autour de la partie centrale (21a), chacun des logements (216) possédant une forme spécifique et étant destiné à recevoir un élément de liaison (226) correspondant du couvercle (22) possédant une forme complémentaire à celle dudit logement (216), ladite forme spécifique et ladite forme complémentaire étant configurées pour empêcher tout déplacement relatif entre le couvercle (22) et le flasque de bobinage avant (15), respectivement arrière (15'), selon une direction radiale, sécurisant ainsi le couplage du couvercle (22) sur le flasque de bobinage avant (15), respectivement arrière (15').

12. Rotor (10) bobiné selon la revendication 11, **caractérisé en ce que** les logements (216) de la cavité (21) possèdent une forme en queue d'aronde.

13. Rotor (10) bobiné selon l'une des revendications précédentes, **caractérisé en ce que** les canaux longitudinaux (18) de circulation de fluide sont définis au moins partiellement par des rainures (148) formées le long des surfaces externes (145) du paquet de tôles (14) qui sont en contact avec les isolants de paquet de tôles (17).

14. Rotor (10) bobiné selon l'une des revendications précédentes, **caractérisé en ce que** les canaux longitudinaux (18) de circulation de fluide sont définis au moins partiellement par des rainures (178) formées le long de surfaces internes (171) des isolants de paquet de tôles (17) qui sont en contact avec le paquet de tôles (14).

15. Moteur électrique (1) comprenant un rotor (10) bobiné selon l'une des revendications précédentes.

## Patentansprüche

1. Gewickelter Rotor (10) für Elektromotor (1), umfassend:
- eine Rotorwelle (12), die um eine Achse (X) drehbar montiert ist;
- ein koaxial auf der Rotorwelle (12) montiertes Blechpaket (14), wobei sich das Blechpaket (14) zwischen einer vorderen Seitenfläche (143) und einer hinteren Seitenfläche (144) erstreckt und einen Polwechsel (141) und Polzwischenräume (142) aufweist,
- Blechpaketisolatoren (17), die so angeordnet sind, dass sie die die Polzwischenräume (142) definierenden Außenflächen (145) des Blechpakets (14) mindestens teilweise bedecken, wobei die Blechpaketisolatoren (17) und die Außenflächen (145) so eingerichtet sind, dass sie untereinander Längskanäle (18) für die Fluidzirkulation bilden, wobei sich die Längskanäle (18) für die Fluidzirkulation axial entlang des Blechpakets (14) so erstrecken, dass sie an einem ihrer Enden an der vorderen Seitenfläche (143) des Blechpakets (14) und an einem anderen ihrer Enden an der hinteren Seitenfläche (144) des Blechpakets (14) auslaufen, wobei die Längskanäle (18) für die Fluidzirkulation so eingerichtet sind, dass sie die Zirkulation eines Kühlfluids ermöglichen;
- einen vorderen Wickelflansch (15) und einen hinteren Wickelflansch (15'), die koaxial auf der Rotorwelle (12) montiert und axial auf beiden Seiten des Blechpakets (14) angeordnet sind, so dass sie jeweils an den vorderen und hinteren Seitenflächen (143, 144) des Blechpakets (14) anliegen, wobei die vorderen und hinteren Wickelflansche (15, 15') jeweils eine Reihe von radialen T-förmigen Schenkeln (151) aufweisen, wobei jeder der radialen Schenkel (151) axial mit einem der Pole (141) des Blechpakets (14) ausgerichtet ist und vorzugsweise ein ähnliches oder identisches Profil wie das des Pols (141) in einer zur Achse (X) der Welle senkrechten Ebene aufweist;
- Wicklungen (16), die die Blechpaketisolatoren (17) und die radialen Schenkel (151) der vorderen und hinteren Wickelflansche (15, 15') teilweise umschließen;
wobei die Welle (12) mit mindestens einem ersten inneren Kanal (124) für die Zirkulation eines Kühlfluids, dem Fluideinlasskanal, und mit mindestens einem zweiten inneren Kanal (126) für die Zirkulation eines Kühlfluids, dem Fluidauslasskanal, versehen ist, und dass der vordere Wickelflansch (15) beziehungsweise der hintere Wickelflansch (15') von mindestens einem vorderen beziehungsweise hinteren Verbindungskanal durchzogen wird, in dem ein Kühlfluid zirkulieren kann, wobei der mindestens vordere beziehungsweise hintere Verbindungskanal mit einem der Fluideinlasskanäle (124) und Fluidauslasskanäle (126) und mit mindestens einem der Längskanäle (18) für die Fluidzirkulation in fluidischer Kommunikation steht.

2. Gewickelter Rotor (10) nach Anspruch 1, **dadurch gekennzeichnet, dass** der mindestens eine vordere Verbindungskanal mit dem Fluideinlasskanal (124) in fluidischer Kommunikation steht und der mindestens eine hintere Verbindungskanal mit dem Fluidauslasskanal (126) in fluidischer Kommunikation steht, so dass ein zur Kühlung des Rotors bestimmtes Fluid sukzessive durch den Fluideinlasskanal (124) und dann innerhalb des vorderen Wickelflansches (15) in dem Rotor zirkulieren kann durch den mindestens einen vorderen Verbindungskanal, dann entlang des Blechpakets (14) durch mindestens einen der Längskanäle (18) für die Fluidzirkulation, dann innerhalb des hinteren Wickelflansches (15') durch den mindestens einen hinteren Verbindungskanal und schließlich durch den Fluidauslasskanal (126).

3. Gewickelter Rotor (10) nach Anspruch 2, **dadurch gekennzeichnet, dass** die Welle (12) einen vorderen Endabschnitt (121) und einen hinteren Endabschnitt (123) umfasst, der vom vorderen Endabschnitt (121) durch einen mittleren vollen Abschnitt (122) getrennt ist, wobei der vordere Endabschnitt (121) beziehungsweise der hintere Endabschnitt (123) durch einen zentralen zylinderförmigen Hohlraum hindurchgeführt ist, wobei der zentrale Hohlraum den Fluideinlasskanal (124), beziehungsweise den Fluidauslasskanal (126), der Welle (12) bildet, und dass mindestens eine Verbindungsbohrung (125, 127) radial zur Achse (X) der Welle (12) ausgerichtet ist, innerhalb des vorderen Endabschnitts (121) bzw. des hinteren Endabschnitts (123) so ausgebildet ist, dass sie einerseits in den Fluideinlasskanal (124) beziehungsweise in den Fluidauslasskanal (126) und andererseits in den mindestens einen vorderen Verbindungskanal beziehungsweise in den mindestens einen hinteren Verbindungskanal ausläuft.

4. Gewickelter Rotor (10) nach einem der vorhergehenden Ansprüche, **dadurch gekennzeichnet, dass** der wenigstens eine vordere, beziehungsweise hintere Verbindungskanal mindestens einen radial zur Achse (X) der Welle ausgerichteten ersten Abschnitt (214, 224), mindestens einen orthoradial zur Achse (X) der Welle ausgerichteten zweiten Abschnitt (215, 225) und mindestens einen parallel zur Achse (X) der Welle ausgerichteten dritten Abschnitt (218, 228) umfasst, wobei der mindestens erste Abschnitt (214, 224) mindestens ein an die Rotorwelle (12) angrenzendes Ende aufweist, wobei der mindestens zweite Abschnitt (215, 225) auf einer Seite zu dem mindestens einen ersten Abschnitt (214, 224) und, auf der anderen Seite an dem mindestens einen dritten Abschnitt (218, 228) ausläuft, und wobei der mindestens eine dritte Abschnitt (218, 228) mindestens ein Ende besitzt, das an einem der Längskanäle (18) für die Fluidzirkulation ausläuft.

5. Gewickelter Rotor (10) nach einem der vorhergehenden Ansprüche, **dadurch gekennzeichnet, dass** der vordere Wickelflansch (15), beziehungsweise der hintere Wickelflansch (15'), von einer Vielzahl von vorderen Verbindungskanälen durchzogen wird, beziehungsweise hinten, jeder dieser vorderen, beziehungsweise hinteren Verbindungskanäle einen ersten Abschnitt (214, 224) radial zur Achse (X) der Welle ausgerichtet, mehrere zweite Abschnitte (215, 225) orthoradial zur Achse (X) der Welle ausgerichtet und mehrere dritte Abschnitte (218, 228), die parallel zur Achse (X) der Welle ausgerichtet sind, wobei der erste Abschnitt (214, 224) mindestens ein an die Rotorwelle (14) angrenzendes Ende aufweist, wobei jeder der zweiten Abschnitte (215, 225) auf einer Seite auf dem ersten Abschnitt (214, 224) und, auf der anderen Seite an einem der dritten Abschnitte (218, 228) ausläuft, wobei jeder der dritten Abschnitte (218, 228) mindestens ein Ende aufweist, das an einem der Längskanäle (18) für die Fluidzirkulation ausläuft.

6. Gewickelter Rotor (10) nach Anspruch 4 oder 5, **dadurch gekennzeichnet, dass** der dritte Abschnitt (218, 228) oder jeder der dritten Abschnitte (218, 228) mindestens ein anderes Ende (220) aufweist, das an einer äußeren Seitenfläche (155) des vorderen (15) beziehungsweise hinteren (15') Wickelflansches, der den Wicklungen (16) zugewandt ist, ausläuft.

7. Gewickelter Rotor (10) nach einem der Ansprüche 4 bis 6, **dadurch gekennzeichnet, dass** der vordere (15) beziehungsweise hintere (15') Wickelflansch eine mit der vorderen (143), beziehungsweise hinteren (144), Seitenfläche berührende innere (153) Seitenfläche des Blechpakets (14) aufweist, wobei die innere Seitenfläche (153) mit einem Hohlraum (21) versehen ist, in dem ein Deckel (22) untergebracht wird, wobei der Hohlraum (21) so eingerichtet ist, dass er zumindest teilweise, in Verbindung mit dem Deckel (22), den, beziehungsweise die, vorderen, beziehungsweise hinteren, Verbindungskanäle bildet.

8. Gewickelter Rotor (10) nach Anspruch 7, **dadurch gekennzeichnet, dass** der Hohlraum (21) einen ringförmigen Mittelteil (21a) umfasst, der sich radial von einem ausgehöhlten Mittelbereich (157) des vorderen (15) beziehungsweise hinteren (15') Wickelflansches erstreckt, wobei der Mittelbereich (157) so eingerichtet ist, dass er die Welle (12) des Rotors teilweise aufnimmt, und mehrere radiale Verlängerungen (21b), die sich radial von dem Mittelteil (21a) aus erstrecken, wobei jeder der radialen Verlängerungen (21b) mit einem der radialen Schenkel (151) des vorderen (15) beziehungsweise hinteren (15') Wickelflansches ausgerichtet ist.

9. Gewickelter Rotor (10) nach Anspruch 8, **dadurch gekennzeichnet, dass** der Hohlraum (21) durch eine Bodenwand (211) und durch mehrere Seitenwände (212, 213) begrenzt ist, die senkrecht zur Bodenwand (211) ausgerichtet sind, wobei die Bodenwand (211) mit ersten radial zur Achse (X) der Welle ausgerichteten Nuten (214) versehen ist und zweiter Nuten (215), die orthoradial zur Achse (X) der Welle ausgerichtet sind, wobei die ersten und zweiten Nuten (214, 215) in Kombination mit Nuten (224), 225) des Deckels (22), die ersten und zweiten Abschnitte (214, 224, 215, 225) der vorderen beziehungsweise hinteren Verbindungskanäle bilden.

10. Gewickelter Rotor (10) nach Anspruch 9, **dadurch gekennzeichnet, dass** mehrere Seitenwände (212), die radial zur Achse (X) der Welle ausgerichtet sind, mit dritten Nuten (218) versehen sind, die parallel zur Achse (X) der Welle ausgerichtet sind, wobei die dritten Nuten (218) in Kombination mit entsprechenden Nuten (228) des Deckels (22) mindestens einen Teil der dritten Abschnitte (218, 228) der vorderen beziehungsweise hinteren Verbindungskanäle bilden.

11. Gewickelter Rotor (10) nach einem der Ansprüche 8 bis 10, **dadurch gekennzeichnet, dass** der Hohlraum (21) so eingerichtet ist, dass er radial um den Mittelteil (21a) angeordnete Gehäuse (216) bildet, wobei jedes der Gehäuse (216) eine spezifische Form aufweist und dazu bestimmt ist, ein entsprechendes Verbindungselement (226) des Deckels (22) aufzunehmen, das eine Form aufweist, die zu der des Gehäuses (216) komplementär ist, wobei die spezifische Form und die ergänzende Form so eingerichtet sind, dass sie eine relative Bewegung zwischen dem Deckel (22) und dem vorderen (15) beziehungsweise hinteren Wickelflansch (15') in radialer Richtung verhindern, wodurch die Kopplung des Deckels (22) mit dem vorderen (15) beziehungsweise hinteren Wickelflansch (15') gesichert wird.

12. Gewickelter Rotor (10) nach Anspruch 11, **dadurch gekennzeichnet, dass** die Gehäuse (216) des Hohlraums (21) eine Schwalbenschwanzform aufweisen.

13. Gewickelter Rotor (10) nach einem der vorhergehenden Ansprüche, **dadurch gekennzeichnet, dass** die Längskanäle (18) für die Fluidzirkulation mindestens teilweise durch Nuten (148) definiert sind, die entlang der Außenflächen (145) der Blechpaketisolatoren (17) gebildet werden, die mit dem Blechpaket (14) in Kontakt stehen.

14. Gewickelter Rotor (10) nach einem der vorhergehenden Ansprüche, **dadurch gekennzeichnet, dass** die Längskanäle (18) für die Fluidzirkulation mindestens teilweise durch Nuten (178) definiert sind, die entlang der Innenflächen (171) der Blechpaketisolatoren (17) gebildet werden, die mit dem Blechpaket (14) in Kontakt stehen.

15. Elektromotor (1), der einen gewickelten Rotor (10) nach einem der vorhergehenden Ansprüche umfasst.

## Claims

1. A wound rotor (10) for an electric motor (1) comprising:
- a rotor shaft (12) rotatably mounted about an axis (X);
- a stack of laminations (14) mounted coaxially on the rotor shaft (12), said stack of laminations (14) extending between a front lateral face (143) and a rear lateral face (144) and having an alternation of poles (141) and interpolar spaces (142),
- stack of laminations insulators (17) arranged so as to at least partially cover external surfaces (145) of the stack of laminations (14) defining the interpolar spaces (142), said stack of laminations insulators (17) and said external surfaces (145) being configured to form, therebetween, longitudinal fluid circulation channels (18), said longitudinal fluid circulation channels (18) extending axially along the stack of laminations (14) such that they open, at one of their ends, at the level of the front lateral face (143) of said stack of laminations (14) and, at another of their ends, at the level of the rear lateral face (144) of said stack of laminations (14), said longitudinal fluid circulation channels (18) being configured to allow the circulation of a cooling fluid;
- a front winding flange (15) and a rear winding flange (15') mounted coaxially on the rotor shaft (12) and arranged axially on either side of the stack of laminations (14) so as to be contiguous respectively to the front and rear lateral faces (143, 144) of the stack of laminations (14), said front and rear winding flanges (15, 15') each having a series of T-shaped radial branches (151), each of said radial branches (151) being axially aligned with one of the poles (141) of the stack of laminations (14) and preferably having a profile similar or identical to that of said pole (141) in a plane perpendicular to the axis (X) of the shaft;
- windings (16) partially surrounding the stack of laminations insulators (17) and the radial branches (151) of the front and rear winding flanges (15, 15');
in which the shaft (12) is provided with at least one first internal channel (124) for circulating a cooling fluid, called the fluid inlet channel, and at least one second internal channel (126) for circulating a cooling fluid, called the fluid outlet channel, and in that the front winding flange (15), respectively the rear winding flange (15'), is crossed by at least one front, respectively rear, connecting channel, inside which a cooling fluid can circulate, said at least one front, respectively rear connecting channel being in fluid communication with one of said fluid inlet (124) and fluid outlet (126) channels and with at least one of said longitudinal fluid circulation channels (18).

2. The wound rotor (10) according to claim 1, **characterized in that** said at least one front connecting channel is in fluid communication with the fluid inlet channel (124) and said at least one rear connecting channel is in fluid communication with the fluid outlet channel (126), such that a fluid intended for cooling the rotor can circulate in the rotor successively through the fluid inlet channel (124), then inside the front winding flange (15) through said at least one front connecting channel, then along the stack of laminations (14) through at least one of the longitudinal fluid circulation channels (18), then inside the rear winding flange (15') through said at least one rear connecting channel, and finally through the fluid outlet channel (126).

3. The wound rotor (10) according to claim 2, **characterized in that** the shaft (12) comprises a front end portion (121) and a rear end portion (123) separated from the front end portion (121) by a solid central portion (122), the front end portion (121), respectively the rear end portion (123), being crossed by a central cavity of cylindrical shape, said central cavity forming the fluid inlet channel (124), respectively the fluid outlet channel (126), of the shaft (12), and **in that** at least one connecting hole (125, 127) oriented radially relative to the axis (X) of the shaft (12) is formed inside the front end portion (121), respectively the rear end portion (123), so as to open on one side into the fluid inlet channel (124), respectively in the fluid outlet channel (126), and on the other side in said at least one front connecting channel, respectively in said at least one rear connecting channel.

4. The wound rotor (10) according to any of the preceding claims, **characterized in that** said at least one front, respectively rear, connecting channel comprises at least one first section (214, 224) oriented radially relative to the axis (X) of the shaft, at least one second section (215, 225) oriented orthoradially relative to the axis (X) of the shaft, and at least one third section (218, 228) oriented parallel to the axis (X) of the shaft, in which said at least one first section (214, 224) has at least one end adjoining the rotor shaft (12), in which said at least one second section (215, 225) opens, on one side, onto said at least one first section (214, 224) and, on the other side, onto said at least one third section (218, 228), and in which said at least one third section (218, 228) has at least one end opening at one of the longitudinal fluid circulation channels (18).

5. The wound rotor (10) according to any of the preceding claims, **characterized in that** the front (15), respectively rear (15'), winding flange is crossed by a plurality of front, respectively rear, connecting channels, each of said front, respectively rear, connecting channels comprises a first section (214, 224) oriented radially relative to the axis (X) of the shaft, several second sections (215, 225) oriented orthoradially relative to the axis (X) of the shaft, and several third sections (218, 228) oriented parallel to the axis (X) of the shaft, in which said first section (214, 224) has at least one end adjoining the rotor shaft (14), in which each of said second sections (215, 225) opens, on one side, onto the first section (214, 224) and, on the other side, on one of the third sections (218, 228), and in which each of said third sections (218, 228) has at least one end opening at one of the longitudinal fluid circulation channels (18).

6. The wound rotor (10) according to claim 4 or 5, **characterized in that** the third section (218, 228) or each of the third sections (218, 228) has at least one other end (220) opening at an external lateral face (155) of the front winding flange (15), respectively rear winding flange (15'), which faces the windings (16).

7. The wound rotor (10) according to any of claims 4 to 6, **characterized in that** the front winding flange (15), respectively the rear winding flange (15'), has an internal lateral face (153) in contact with the front lateral face (143), respectively with the rear lateral face (144), said internal lateral face (153) being provided with a cavity (21) in which a cover (22) is housed, said cavity (21) being configured to form at least partially, in combination with said cover (22), the front, respectively rear, connecting channel(s).

8. The wound rotor (10) according to claim 7, **characterized in that** the cavity (21) comprises a central part (21a) of annular shape, which extends radially from a hollowed-out central zone (157) of the front (15), respectively rear (15') winding flange, said central zone (157) being configured to partially house the shaft (12) of the rotor, and several radial extensions (21b) extending radially from said central part (21a), each of the radial extensions (21b) being aligned with one of the radial branches (151) of the front (15), respectively rear (15'), winding flange.

9. The wound rotor (10) according to claim 8, **characterized in that** the cavity (21) is delimited by a bottom wall (211) and by several lateral walls (212, 213) oriented perpendicular to said bottom wall (211), said bottom wall (211) being provided with first grooves (214) oriented radially relative to the axis (X) of the shaft and second grooves (215) oriented orthoradially relative to the axis (X) of the shaft, said first and second grooves (214, 215) respectively forming, in combination with corresponding grooves (224, 225) of the cover (22), the first and second sections (214, 224, 215, 225) of the front, respectively rear, connecting channels.

10. The wound rotor (10) according to claim 9, **characterized in that** several lateral walls (212), which are oriented radially with respect to the axis (X) of the shaft, are provided with third grooves (218) oriented parallel to the axis (X) of the shaft, said third grooves (218) forming, in combination with corresponding grooves (228) of the cover (22), at least part of the third sections (218, 228) of the front, respectively rear, connecting channels.

11. The wound rotor (10) according to any of claims 8 to 10, **characterized in that** the cavity (21) is configured to form housings (216) arranged radially about the central part (21a), each of the housings (216) having a specific shape and being intended to receive a corresponding connecting element (226) of the cover (22) having a shape complementary to that of said housing (216), said specific shape and said complementary shape being configured to prevent any relative displacement between the cover (22) and the front winding flange (15), respectively the rear winding flange (15'), in a radial direction, thus securing the coupling of the cover (22) on the front winding flange (15), respectively the rear winding flange (15').

12. The wound rotor (10) according to claim 11, **characterized in that** the housings (216) of the cavity (21) have a dovetail shape.

13. The wound rotor (10) according to any of the preceding claims, **characterized in that** the longitudinal fluid circulation channels (18) are defined at least partially by grooves (148) formed along the outer surfaces (145) of the stack of laminations (14) that are in contact with the stack of laminations insulators (17).

14. The wound rotor (10) according to any of the preceding claims, **characterized in that** the longitudinal fluid circulation channels (18) are defined at least partially by grooves (178) formed along internal surfaces (171) of the stack of laminations insulators (17) that are in contact with the stack of laminations (14).

15. An electric motor (1) comprising a wound rotor (10) according to any of the preceding claims.
